Europäisches Patentamt

European Patent Office

Office européen des brevets

(19)

(11) EP 1 168 345 A2

(12) **EUROPEAN PATENT APPLICATION**

(43) Date of publication:
**02.01.2002 Bulletin 2002/01**

(51) Int Cl.$^7$: **G11B 27/30**, G11B 27/19, G11B 20/12, G11B 7/007

(21) Application number: **01300658.0**

(22) Date of filing: **25.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.06.2000 JP 2000186635**

(71) Applicant: **FUJITSU LIMITED**
**Kawasaki-shi, Kanagawa 211-8588 (JP)**

(72) Inventor: **Numata, Takehiko**
**Kawasaki-shi, Kanagawa 211-8588 (JP)**

(74) Representative: **Fenlon, Christine Lesley et al**
**Haseltine Lake & Co., Imperial House, 15-19 Kingsway**
**London WC2B 6UD (GB)**

(54) **Optical storage medium and optical storage device**

(57) An optical storage medium, having land tracks (18) and groove tracks (20) alternately formed and capable of recording and reproducing information with respect to the land tracks (18) and the groove tracks (20), includes a plurality of first headers (32) respectively having first track addresses as consecutive numbers given to the land tracks (18), and a plurality of second headers (30) respectively having second track addresses as consecutive numbers given to the groove tracks (20) independently of the consecutive numbers of the land tracks (18).

# F I G. 3

## Description

The present invention relates generally to an optical storage medium having a land and a groove as recording tracks, and more particularly to a numbering method for track addresses on the optical storage medium.

An optical disk is generally classified into a read-only optical disk such as a CD-ROM, a write once optical disk allowed to be recorded once, and a rewritable optical disk such as a magneto-optical disk and a phase-change type optical disk. Such an optical disk has received attention as a memory medium that becomes a core in the recent rapid development of multimedia. A spiral groove or concentric grooves for guiding a laser beam to be directed onto the optical disk is/are formed on a substrate of the optical disk. A flat portion formed between any adjacent portions of the spiral groove or between any adjacent ones of the concentric grooves is referred to as a land.

In a previously-proposed general optical disk, either the land or the groove is used as recording tracks for recording information. Accordingly, a very simple method can be adopted to configure a header portion as a plurality of prepits preliminarily formed. In general, the land and the groove have a spiral structure such that they start from the inner circumference or outer circumference of an optical disk and end at the outer circumference or inner circumference of the optical disk. Also proposed is an optical disk in which a plurality of lands and grooves are concentrically formed.

Each of the spiral land and the spiral groove is divided into many segments or tracks each having a specific length to facilitate the access from an optical disk drive, and these tracks are respectively given track addresses (track numbers). Each track is further divided into a plurality of units called sectors in the circumferential direction of the disk, and these sectors are also respectively given sector addresses (sector numbers).

Aside from these track addresses and sector addresses, each track is given a number called a logical block address (LBA) in each sector. The LBA is produced in the optical disk drive, and it is converted into a track address and a sector address. The LBA is used in accessing from an operating system (OS) to the optical disk, and it is sequentially numbered from the start sector of the first track.

There has recently been proposed and become commercially available an optical disk using both the land and the groove as the recording tracks. In this optical disk, the track pitch is reduced to thereby increase a recording density. In such a land/groove recording type optical storage medium, the land tracks and the groove tracks are alternately given track addresses.

In a land/groove recording type optical storage medium, recording/reproducing conditions and servo conditions are different between the land tracks and the groove tracks. Accordingly, in the above land/groove recording type optical storage medium having the land tracks and the groove tracks alternately given track addresses (numbers), the time for changing the recording/reproducing conditions and the servo conditions with the change between the land tracks and the groove tracks is required, causing a delay in the access.

Further, since the operating speed of a CPU in a recent computer has been improved, the processing in the optical disk drive may become late in response to the access from an OS or the like in the case of using a land/groove recording type optical storage medium adopting the previously-proposed numbering method for track addresses as mentioned above, so that there is a possibility that the OS may be hung up because of timeout. Further, the conversion of the LBAs to the track addresses and the sector addresses may be complicated depending upon an allocating method for the LBAs, causing an increase in alternation processing time or erroneous conversion to result in an increase in amount of memory used in the optical disk drive.

It is therefore desirable to provide a land/groove recording type optical storage medium which can improve an access speed.

It is also desirable provide an optical storage device which can improve an access speed to a land/groove recording type optical storage medium.

According to an embodiment of a first aspect of the present invention, there is provided an optical storage medium having land tracks and groove tracks alternately formed and capable of recording and/or reproducing information with respect to the land tracks and the groove tracks, comprising a plurality of first ID portions respectively having first track addresses as consecutive numbers given to the land tracks; and a plurality of second ID portions respectively having second track addresses as consecutive numbers given to the groove tracks independently of the consecutive numbers of the first track addresses.

Preferably, each of the first ID portions has a first identifier for identifying the land tracks, and each of the second ID portions has a second identifier for identifying the groove tracks. Each of the first ID portions is provided in each of first headers and each of the second ID portions is provided in each of second headers.

According to an embodiment of a second aspect of the present invention, there is provided an optical storage medium having land tracks and groove tracks alternately formed and divided into a plurality of groups, and capable of recording and/or reproducing information with respect to the land tracks and the groove tracks, comprising a plurality of first ID portions respectively having first track addresses as consecutive numbers given to the land tracks in each group; and a plurality of second ID portions respectively having second track addresses as consecutive numbers given to the groove tracks in each group; the consecutive numbers of the second track addresses being consecutive to the consecutive numbers of the first track addresses in the same group; the consecutive numbers of the first track addresses in any one of the groups being consecutive to the consecutive numbers of the second track addresses in its immediately preceding group.

The method of dividing the land tracks and the groove tracks into a plurality of groups is arbitrary. For example, these tracks may be divided per band (zone) or may be divided per plural bands as a unit. Preferably, each of the first ID portions has a first identifier for identifying the land tracks, and each of the second ID portions has a second identifier for identifying the groove tracks. The consecutive numbers of the second track addresses may precede the consecutive numbers of the first track addresses. In this case, the consecutive numbers of the second track addresses in any one of the groups are consecutive to the consecutive numbers of the first track addresses in its immediately preceding group.

According to an embodiment of a third aspect of the present invention, there is provided an optical storage device for transferring information by logical block addresses to an optical storage medium having land tracks and groove tracks alternately formed and given a plurality of track addresses and a plurality of sector addresses, comprising a producing unit for producing the logical block addresses for giving consecutive numbers to the track addresses of one kind of the land tracks and the groove tracks in each sector, and giving consecutive numbers to the track addresses of the other kind of the land tracks and the groove tracks in each sector so that the consecutive numbers of the track addresses of the other kind are consecutive to the consecutive numbers of the track addresses of the one kind; and a converting unit for converting the logical block addresses into the track addresses and the sector addresses of the optical storage medium.

According to an embodiment of a fourth aspect of the present invention, there is provided an optical storage device for transferring information by logical block addresses to an optical storage medium having land tracks and groove tracks alternately formed and given a plurality of track addresses and a plurality of sector addresses, comprising a producing unit for producing the logical block addresses for dividing the land tracks and the groove tracks into a plurality of groups, giving consecutive numbers to the track addresses of one kind of the land tracks and the groove tracks in any one of the groups in each sector, giving consecutive numbers to the track addresses of the other kind of the land tracks and the groove tracks in the any group in each sector so that the consecutive numbers of the track addresses of the other kind are consecutive to the consecutive numbers of the track addresses of the one kind, and giving consecutive numbers to the track addresses of the one kind in the group next to the any group in each sector so that the consecutive numbers of the track addresses of the one kind in the next group are consecutive to the consecutive numbers of the track addresses of the other kind in the any group; and a converting unit for converting the logical block addresses into the track addresses and the sector addresses of the optical storage medium.

Reference will now be made, by way of example, to the accompanying drawings, in which:

FIG. 1 is a fragmentary perspective view showing a schematic configuration of a land/groove recording type optical storage medium;
FIG. 2 is a schematic view showing the configuration of recording tracks of an optical disk;
FIG. 3 is a schematic view showing the arrangement of sectors;
FIG. 4 is a schematic view showing a substrate format;
FIG. 5 is a schematic view showing a sector format;
FIG. 6 is a schematic representation of a numbering method for track addresses according to a first preferred embodiment of the present invention;
FIG. 7 is a schematic representation of a numbering method for track addresses according to a second preferred embodiment of the present invention;
FIG. 8 is a circuit block diagram of an optical disk drive embodying the present invention;
FIG. 9 is a schematic view showing the internal structure of the disk drive in which an MO cartridge is loaded;
FIG. 10 is a schematic representation of a numbering method for LBAs according to a third preferred embodiment of the present invention;
FIG. 11 is a schematic representation of a numbering method for LBAs according to a fourth preferred embodiment of the present invention;
FIG. 12 is a flowchart showing physical formatting;
FIG. 13 is a flowchart showing surface check processing;
FIG. 14 is a flowchart showing PDL/SDL preparation processing; and
FIG. 15 is a flowchart showing DMA preparation processing.

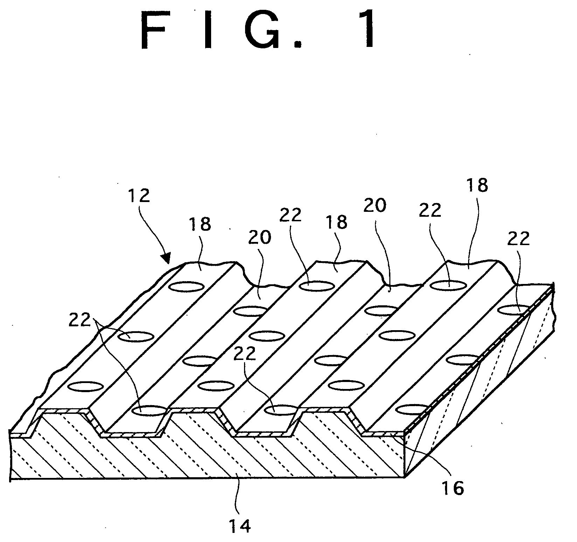

Referring to FIG. 1, there is shown a schematic configuration of a land/groove recording type optical storage medium 12. The optical storage medium 12 usually has the form of a disk. Reference numeral 14 denotes a transparent substrate formed of glass or polycarbonate, for example. The substrate 14 has land tracks 18 and groove tracks 20 alternately formed. The center distance (track pitch) between any adjacent ones of the land tracks 18 and the groove tracks 20 of the substrate 14 is 0.65 μm, for example, and a recording layer 16 is formed on the substrate 14. The level difference between the land tracks 18 and the groove tracks 20 of the substrate 14 is 35 nm, for example. It is sufficient that the optical storage medium 12 applicable to the present invention is an optical storage medium having at least a land and a groove as recording tracks. As the recording layer 16, a magneto-optical recording layer or a phase-change type recording layer may be adopted, for example.

In manufacturing such an optical storage medium, a groove and pits are preliminarily formed on a transparent substrate. Specifically, a stamper having a positive resist film is used and it is exposed to a laser beam at a portion except a portion corresponding to the groove and the pits. Then, the portion corresponding to the groove and the pits is formed into a projecting portion by development and etching. Then, the stamper thus prepared is mounted on a die of an injection molding machine, and a resin such as polycarbonate is supplied to the injection molding machine to thereby prepare the transparent substrate of the optical storage medium. Thereafter, a recording layer, protective layer, and reflective layer are formed on a transfer surface (a surface formed with the groove and the pits) of the transparent substrate to thereby complete the optical storage medium. A manufacturing method for such a substrate is described in Japanese Patent Laid-open No. Hei 11-232707, for example.

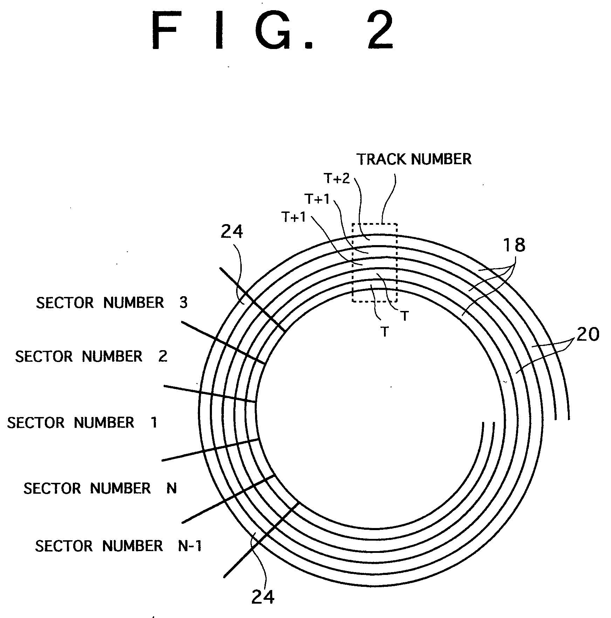

Referring to FIG. 2, there is shown a schematic configuration of recording tracks of an optical disk according to a first preferred embodiment of the present invention. The recording tracks consist of the land tracks 18 and the groove tracks 20. The groove tracks 20 are continuous so as to form a spiral groove, and the land tracks 18 are also continuous so as to form a spiral land in such a manner that each land track 18 having a flat surface is defined between any adjacent ones of the groove tracks 20. The land tracks 18 are respectively provided with track numbers T, T+1, T+2, ... increasing from the inner circumferential side to the outer circumferential side of the disk. Similarly, the groove tracks 20 are respectively provided with track numbers T, T+1, T+2, ... increasing from the inner circumferential side to the outer circumferential side of the disk, independently of the track numbers of the land tracks 18.

Reference numerals 24 denote a plurality of sectors obtained by dividing each track into N track segments in the circumferential direction of the disk. These N sectors are respectively provided with sector numbers (sector addresses) 1 to N. The land tracks 18 and the groove tracks 20 are spirally formed. Therefore, in the land tracks 18, the N-th sector of the T-th track is continuous to the 1-st sector of the (T+1)-th track. Similarly, also in the groove tracks 20, the N-th sector of the T-th track is continuous to the 1-st sector of the (T+1)-th track.

These land track numbers, groove track numbers, and sector numbers are preliminarily formed as prepits (pit/land information), for example, on the substrate of the disk. Further, although not especially shown, the land tracks 18 and the groove tracks 20 are grouped into a plurality of bands or zones in the radial direction of the disk in such a manner that each band or zone includes a plurality of tracks, e.g., a thousand tracks.

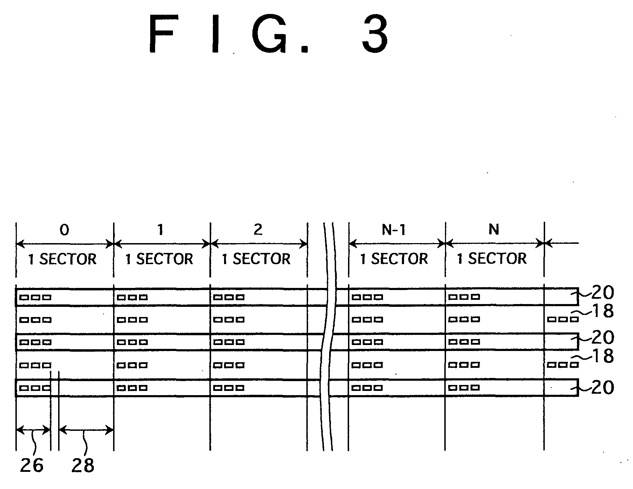

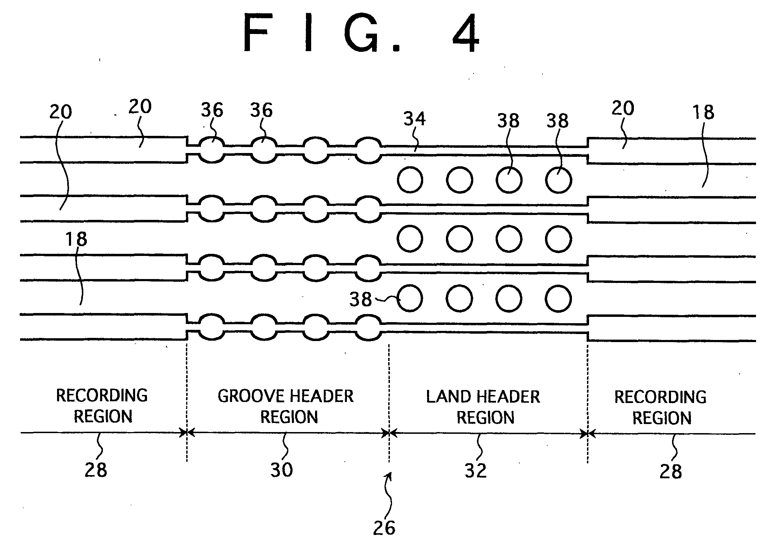

FIG. 3 schematically shows the arrangement of the sectors. Each of the land tracks 18 and the groove tracks 20 in each sector is provided with a header 26. Each sector is composed of the header 26 and a recording region 28. FIG. 4 shows a substrate format in this preferred embodiment of the present invention. The header 26 is composed of a groove header region 30 and a land header region 32 shifted from each other in the circumferential direction of the disk. That is, the header 26 in this preferred embodiment is a staggered header. The groove tracks 20 are spirally formed on the substrate, and each flat land track 18 is defined between any adjacent ones of the groove tracks 20.

A groove 34 narrower than each groove track 20 is formed on an extension of each groove track 20 in the groove header region 30 and the land header region 32. Further, a plurality of prepits 36 partially overlapping each groove 34 are formed in the groove header region 30. The reason for formation of the grooves 34 is to allow track counting even when a head is moved across the headers 26 during seeking. Further, a plurality of prepits 38 are formed on an extension of each land track 18 as the recording track in the land header region 32 so as to be interposed between the adjacent grooves 34. If there is no problem in track counting, the grooves 34 may be omitted from the headers 26, and the prepits 36 and 38 may be formed on a flat surface forming the headers 26.

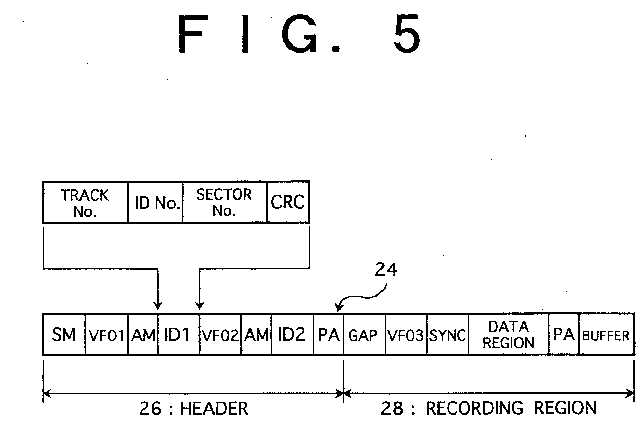

A sector format will now be described with reference to FIG. 5. As mentioned above, each sector 24 includes the header 26 and the recording region 28. SM denotes a sector mark, which includes information for indicating the head of each sector. VFO denotes a variable frequency oscillator, which is a region for PLL phase synchronization and AGC. The header 26 has VFO1 and VFO2, and the recording region 28 has VFO3.

AM denotes an address mark, which gives a byte synchronizing signal for synchronization with a subsequent ID portion to an optical disk drive. The ID portion includes information for recognizing a sector address. That is, each of ID1 and ID2 includes a track number, ID number, sector number, and CRC. In this preferred embodiment, a high-order one bit of the sector number is used to identify the land track 18 or the groove track 20. For example, the high-order one bit is set so that "0" indicates the groove track 20 and "1" indicates the land track 18. PA denotes a postamble, which is provided to indicate the ending of the preceding CRC.

The recording region 28 has a gap portion formed with no prepits to be distinguished from the header 26. SYNC denotes a synchronizing portion, in which a synchronizing signal is recorded as similarly to data. A data region is composed of a read-in zone, user data zone, control zone, and read-out zone. This region includes all information including data compatibility. The user data zone is used for recording and/or reproduction of data by a user. The read-in zone and the read-out zone are used for the test of a disk drive. The control zone is used to record control information of the disk drive.

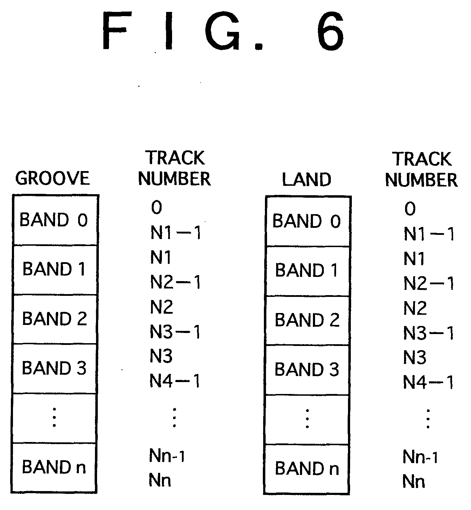

Referring to FIG. 6, there is schematically shown a numbering method for track addresses according to the first preferred embodiment of the present invention. In the optical disk of the first preferred embodiment, the groove tracks 20 are respectively given consecutive track numbers increasing from the inner circumferential side to the outer circumferential side of the disk. Similarly, the land tracks 18 are respectively given consecutive track numbers increasing from the inner circumferential side to the outer circumferential side of the disk, independently of the track numbers of the groove tracks 20. The track numbers (track addresses) of the groove tracks 20 are provided in the respective headers 26 of the groove tracks 20, and the track numbers (track addresses) of the land tracks 18 are provided in the respective headers 26 of the land tracks 18.

The header 26 of each groove track 20 has an identifier (e.g., "0") for identification of the groove track 20, and the header 26 of each land track 18 has an identifier (e.g., "1") for identification of the land track 18. Accordingly, although any adjacent ones of the land tracks and the groove tracks have the same track address and the same sector address, the adjacent land track and groove track can be recognized by the respective identifiers.

According to this preferred embodiment, the land tracks 18 and the groove tracks 20 respectively have the independent track addresses provided by consecutive numbers, so that the access from host equipment is made consecutively either in the land tracks 18 or in the groove tracks 20. Accordingly, it is not necessary to switch a reproducing laser power, reproducing magnetic field, and servo conditions between the tracks, thereby allowing an improvement in access speed.

In the case of numbering track addresses to the land tracks and the groove tracks alternately and consecutively as in the prior art, the recording conditions, reproducing conditions, and servo conditions must be switched every time the land tracks and the groove tracks are changed to each other. Accordingly, waiting time for the change between the land tracks and the groove tracks is required to cause a delay in the access.

In the first preferred embodiment of the present invention, the land tracks and the groove tracks respectively have the independent track addresses, so that the processing can be continuously performed either in the land tracks or in the groove tracks. As a result, if there is no change between the bands (zones) or no large temperature change, it is not necessary to perform a test write/read operation for adjusting an optimum value of write power or read power, thereby greatly shortening the processing time.

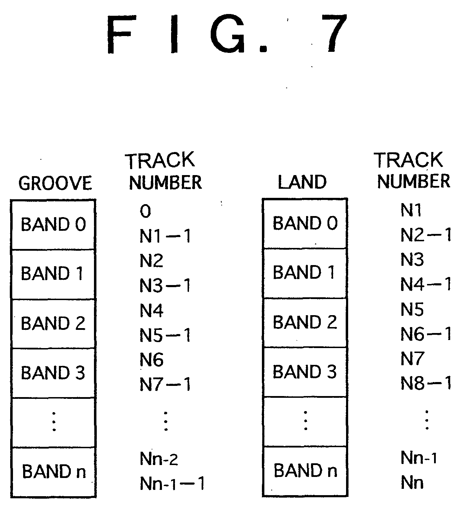

Referring to FIG. 7, there is schematically shown a numbering method for track addresses according to a second preferred embodiment of the present invention. In the second preferred embodiment, the land tracks 18 and the groove tracks 20 are divided into a plurality of groups in the radial direction of the disk. For example, the land tracks 18 and the groove tracks 20 are grouped into a plurality of bands respectively corresponding to the zones of a Z-CAV (zone-constant angular velocity) system. Alternatively, a Z-CLV (zone-constant linear velocity) system may be adopted.

First, the groove tracks 20 in the band #0 are given consecutive track numbers 0 to N1-1. Secondly, the land tracks 18 in the band #0 are given consecutive track numbers N1 to N2-1. Then, the groove tracks 20 in the band #1 are given consecutive track numbers N2 to N3-1 in which the first track number N2 is consecutive from the final track number N2-1 of the land tracks 18 in the band #0.

According to the numbering method for track addresses in this preferred embodiment, the tracks are divided into a plurality of groups, and the land tracks and the groove tracks are given consecutive track numbers alternately group by group. That is, according to this preferred embodiment, the consecutive numbers of the land track addresses are consecutive from the consecutive numbers of the groove track addresses in the same group. Further, the consecutive numbers of the groove track addresses in any one of the groups are consecutive from the consecutive numbers of the land track addresses in its immediately preceding group.

Alternatively, the consecutive numbers of the land tracks may precede the consecutive numbers of the groove tracks in the same group. In this preferred embodiment, these track numbers are recorded in the form of prepits, for example, at the headers 26. The header 26 of each groove track 20 has an identifier for identification of the groove track 20, and the header 26 of each land track 18 has an identifier for identification of the land track 18.

In this preferred embodiment, the method of dividing the tracks into a plurality of groups is arbitrary. For example, the tracks may be divided per band as shown or may be divided per plural bands as a unit. According to this preferred embodiment, although the number of shifts between the land tracks 18 and the groove tracks 20 is larger than that in the first preferred embodiment, head movement in the radial direction of the disk can be made less than that in the first preferred embodiment, thereby allowing a further improvement in access speed.

While the headers in each preferred embodiment are provided by prepits, the headers may be provided by magneto-optical recording or phase-change recording. Further, only the addresses and the identifiers may be formed by optical recording. Each header 26 has an identifier for identification of the land track or the groove track. Accordingly, in converting a logical block address (LBA) used in accessing from an OS into a track number and a sector number, it is possible to easily identify which of the land track and the groove track is to be accessed, thereby improving the access speed.

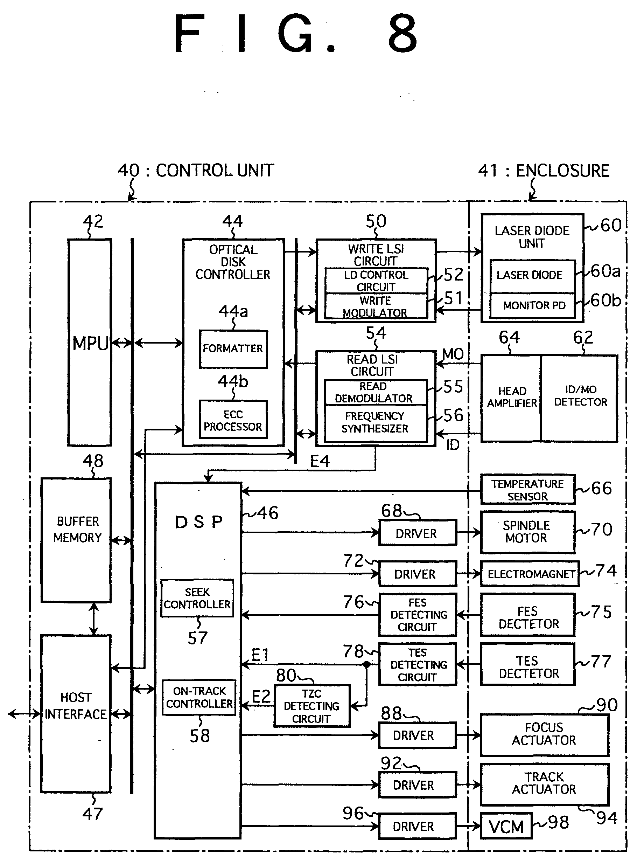

Referring to FIG. 8, there is shown a circuit block diagram of an optical disk drive embodying the present invention. The optical disk drive shown in FIG. 8 is composed generally of a control unit 40 and an enclosure 41. The control unit 40 includes an MPU 42 for performing general control of the optical disk drive, a host interface 47 for exchanging commands and data between the optical disk drive and the host equipment, an optical disk controller (ODC) 44 for performing processing required for read/write of data on an optical disk medium, a digital signal processor (DSP) 46, and a buffer memory 48. The buffer memory 48 is used commonly for the MPU 42, the optical disk controller 44, and the host interface 47.

The optical disk controller 44 includes a formatter 44a and an ECC processor 44b. In write access, the formatter 44a divides NRZ write data into the sectors of the medium to create a recording format. The ECC processor 44b creates an ECC code per sector write data and adds it to the recording format. The ECC processor 44b further creates a CRC code as required and adds it to the recording format. Further, the ECC processor 44b converts the sector data after ECC encoded into a 1-7RLL code, for example.

The formatter 44a creates a logical block address (LBA) used in accessing from an OS. The LBA is preliminarily programmed according to the recording capacity of the optical disk medium, and this program is preliminarily stored in the form of firmware in the formatter 44a. The formatter 44a further preliminarily stores a program for converting the LBA into a track address and a sector address. Further, a defective sector number found in performing physical formatting of the optical disk medium is also stored into the formatter 44a.

In read access, sector read data demodulated is subjected to 1-7RLL inversion, and the ECC processor 44b performs CRC check and error detection and correction. Further, the formatter 44a links NRZ data in sectors and transfers a stream of NRZ read data to the host equipment. A write LSI circuit 50 is controlled by the optical disk controller 44. The write LSI circuit 50 has a write modulator 51 and a laser diode control circuit 52. An output from the laser diode control circuit 52 is supplied to a laser diode unit 60 provided in an optical unit of the enclosure 41.

The laser diode unit 60 has a laser diode 60a and a monitoring photodetector 60b. The write modulator 51 converts write data into PPM recording or PWM recording format data. As an optical disk for performing recording/reproduction by using the laser diode unit 60, i.e., a rewritable magneto-optical (MO) cartridge medium, an optical disk drive embodying the present invention may use any one of different kinds of MO cartridge media having recording capacities of 128 MB, 230 MB, 540 MB, 640 MB, and 1.3 GB.

Of these MO cartridge media, the 128 MB and 230 MB MO cartridge media adopt pit position modulation (PPM) recording such that data is recorded according to the presence or absence of a mark on the medium. Further, the recording format of the medium is CAV (constant angular velocity). On the other hand, the 540 MB, 640 MB, and 1.3 GB MO cartridge media capable of higher-density recording adopt pulse width modulation (PWM) recording such that data is recorded so as to correspond to the edges of a mark, i.e., the leading edge and trailing edge of a mark. Further, a zone CAV is adopted as the recording format of the medium.

Thus, the optical disk drive of the present invention can support various kinds of MO cartridge media having recording capacities of 128 MB, 230 MB, 540 MB, 640 MB, and 1.3 GB. Accordingly, when any one of these kinds of MO cartridge media is loaded into the optical disk drive, an ID portion formed as a plurality of prepits at a header portion of the medium is first read, and the kind of the medium is then recognized from the spacing of the prepits by the MPU 42, which in turn notifies the write LSI circuit 50 of the result of this recognition.

In the case of the 128 MB or 230 MB medium, the sector write data from the optical disk controller 44 is converted into PPM recording data by the write modulator 51, whereas in the case of the 540 MB, 640 MB, or 1.3 GB medium, the sector write data is converted into PWM recording data by the write modulator 51. The PPM recording data or PWM recording data obtained by the write modulator 51 is supplied to the laser diode control circuit 52, and the laser diode 60a is driven to write the data onto the medium.

A read LSI circuit 54 has a read demodulator 55 and a frequency synthesizer 56. Return light from the medium irradiated with a laser beam output from the laser diode 60a is detected by an ID/MO detector 62, and is input as an ID signal and an MO signal through a head amplifier 64 into the read LSI circuit 54. Address information or the like at the header is detected as the ID signal, and a series of data on the identifier, track address, and sector address is reproduced to thereby allow recognition of the position of a beam spot on the medium.

The read demodulator 55 in the read LSI circuit 54 is provided with circuit functions such as an AGC circuit, filter, and sector mark detecting circuit. The read demodulator 55 creates a read clock and read data from the input ID signal and the input MO signal, and demodulates the PPM recording data or PWM recording data to the original NRZ data. A zone CAV is adopted as the control of a spindle motor 70. Accordingly, the MPU 42 performs setting and control of a frequency dividing ratio for generation of a clock frequency corresponding to the zone, to the frequency synthesizer 56 incorporated in the read LSI circuit 54.

The frequency synthesizer 56 is a PLL circuit having a programmable frequency divider, which generates a reference clock as a read clock having a predetermined inherent frequency according to a zone (band) position on the medium. More specifically, the frequency synthesizer 56 is configured by a PLL circuit having a programmable frequency divider, which generates a reference clock having a frequency fo according to a frequency dividing ratio (m/n) set according to a zone number by the MPU 42. The frequency fo is given by:

$$fo = (m/n) \cdot fi$$

In the above expression, the denominator n of the frequency dividing ratio (m/n) represents an inherent value according to the kind of the medium, i.e., 128 MB, 230 MB, 540 MB, 640 MB, or 1.3 GB medium. On the other hand, the numerator m of the frequency dividing ratio (m/n) represents a value changing according to the zone position on the medium. This value is preliminarily stored as table information of values corresponding to zone numbers on each medium. The read LSI circuit 54 further outputs an MOXID signal E4 to the DSP 46. The MOXID signal E4 is a signal having an H level (bit 1) in an MO region as a data region and an L level (bit 0) in an ID region where the prepits are formed. That is, this signal indicates physical positions of the MO region and the ID region on the recording track of the medium.

The read data demodulated in the read LSI circuit 54 is supplied to the optical disk controller 44, and then undergoes 1-7RLL inversion and CRC check and ECC processing by the encoding function of the ECC processor 44b to restore the NRZ sector data. Further, the NRZ sector data is linked to the stream of the NRZ read data in the formatter 44a, and thereafter transferred through the buffer memory 48 and the host interface 47 to the host equipment.

A detection signal from a temperature sensor 66 provided in the enclosure 41 is supplied through the DSP 46 to the MPU 42. The MPU 42 controls optimum values of read, write, and erase optical powers in the laser diode control circuit 52 according to an environmental temperature inside the disk drive detected by the temperature sensor 66. The MPU 42 further controls a spindle motor 70 provided in the enclosure 41 through the DSP 46 and a driver 68. Because the recording format of the MO cartridge medium is a zone CAV, the spindle motor 70 is driven to rotate the disk medium at a constant speed of 4500 rpm, for example. The MPU 42 further controls an electromagnet 74 provided in the enclosure 41 through the DSP 46 and a driver 72. The electromagnet 74 is located opposite to the beam irradiation side of the MO cartridge loaded into the disk drive, and functions to supply an external magnetic field to the medium.

The DSP 46 has a servo function for positioning the laser beam from the laser diode 60a with respect to the medium, and includes a seek controller 57 for seeking the laser beam to a target track to position the beam spot on the target track and an on-track controller 58 for making the laser beam trace the center of the target track. To realize the servo function of the DSP 46, an FES detector 75 for detecting the return light from the medium irradiated with the laser beam is provided in the optical unit in the enclosure 41, and an FES detecting circuit 76 produces a focus error signal from an output from the FES detector 75 to input the focus error signal into the DSP 46.

Further, a TES detector 77 for detecting the return light from the medium is provided in the optical unit in the enclosure 41, and a TES detecting circuit 78 produces a tracking error signal E1 from an output from the TES detector 77 to input the tracking error signal E1 into the DSP 46. The tracking error signal E1 is input into a TZC (Track Zero Cross) detecting circuit 80, in which a track zero cross pulse E2 is produced. The track zero cross pulse E2 from the TZC detecting circuit 80 is input into the DSP 46. The DSP 46 further controls to drive a focus actuator 90, track actuator 94, and VCM 98 through drivers 88, 92, and 96, respectively, to control the position of the beam spot on the medium.

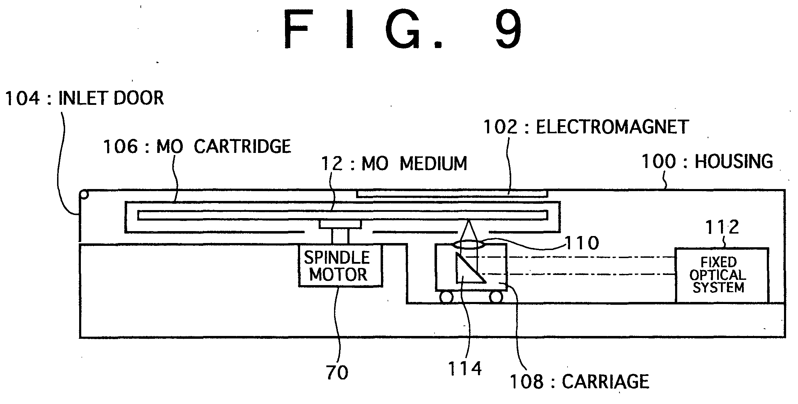

Referring to FIG. 9, there is shown a schematic configuration of the enclosure 41 of the optical disk drive. The spindle motor 70 is provided in a housing 100. When an MO cartridge 106 is inserted into the housing 100 through an inlet door 104, the MO medium 12 in the MO cartridge 106 is chucked to a hub of a rotating shaft of the spindle motor 70, thus loading the MO medium 12. A carriage 108 is provided below the MO medium 12 loaded into the disk drive so as to be movable across the tracks of the MO medium 12 by the VCM 98. An objective lens 110 and a beam raising prism 114 are mounted on the carriage 108.

The laser beam from the laser diode 60a provided ir a fixed optical system 112 is reflected by the beam raising prism 114 to enter the objective lens 110. The laser beam is focused by the objective lens 110 onto the recording surface of the MO medium 12. The objective lens 110 is controlled to move along its optical axis by the focus actuator 90 in the enclosure 41 shown in FIG. 8. The objective lens 110 is further controlled to move across a given number of tracks (e.g., tens of tracks) of the MO medium 12, i.e., in the radial direction thereof, by the track actuator 94 in the enclosure 41 shown in FIG. 8. An electromagnet 102 for applying an external magnetic field to the MO medium 12 is provided above the MO medium 12 loaded into the disk drive.

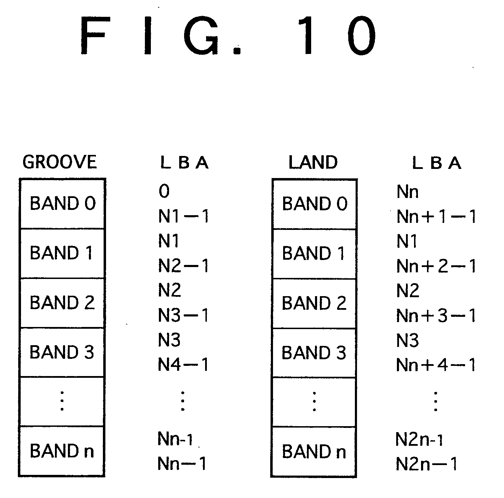

A numbering method for LBAs according to a third preferred embodiment of the present invention will now be described with reference to FIG. 10. As mentioned above, the LBAs are addresses used in accessing from an OS, and a program for carrying out a numbering method for LBAs is preliminarily stored as firmware in the formatter 44a of the optical disk controller 44. In general, control information recorded on the medium by physical formatting to be hereinafter described is read out when the medium is loaded into the optical disk drive. In specifying an LBA from an OS to record/reproduce information on the medium, the LBA must be made to correspond to a physical track number and sector number on the medium. The formatter 44a assigns the LBAs to the track numbers and sector numbers according to the control information recorded on the medium and the medium information stored in the formatter 44a.

According to the numbering method for LBAs in this preferred embodiment, the numbering is started from the start track address of the groove tracks, and consecutive numbers are given to the groove track addresses in each sector. The final track address of the groove tracks is followed by the start track address of the land tracks, and consecutive numbers are given to the land track addresses in each sector. The number given to the start track address of the land tracks is consecutive from the number given to the final track address of the groove tracks.

Alternatively, the LBA numbering may be started from the start track address of the land tracks, and the final track address of the land tracks may be followed by the start track address of the groove tracks. A program of converting the LBAs thus numbered according to the above method into the track addresses and sector addresses on the optical storage medium is preliminarily stored as firmware in the formatter 44a.

When the medium is loaded into the optical disk drive, the LBA information is expanded in a memory in the controller or expanded in a RAM. When the medium is ejected from the optical disk drive, the LBA information is cleared. In the case that a defective sector is present on the medium, sector slip or alternation processing is performed, so that there is a possibility that the addresses on the medium may become temporarily discontinuous. If no defects are present on the medium, the LBAs are consecutively numbered according to the above method.

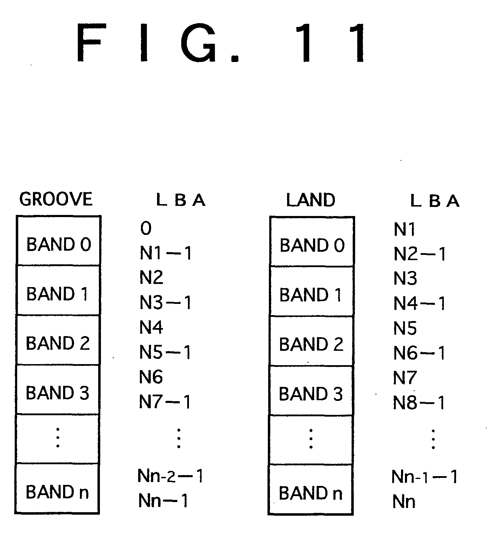

Referring to FIG. 11, there is shown a numbering method for LBAs according to a fourth preferred embodiment of the present invention. In this preferred embodiment, the land tracks and the groove tracks are divided into a plurality of groups. For example, the land tracks and the groove tracks are grouped into the bands on the medium. However, the method of grouping the land tracks and the groove tracks is arbitrary. For example, the land tracks and the groove tracks may be grouped into a plurality of units each composed of a plurality of bands.

In the preferred embodiment shown in FIG. 11, the LBA numbering is started from the start track address of the groove tracks in the band #0, and consecutive numbers are given to the groove track addresses in the band #0. The final track address of the groove tracks in the band #0 is followed by the start track address of the land tracks in the band #0, and consecutive numbers are given to the land tracks addresses in the band #0. The number of the start land track in the band #0 is consecutive from the number of the final groove track in the band #0.

The final track address of the land tracks in the band #0 is followed by the start track address of the groove tracks in the band #1, and consecutive numbers are given to the groove track addresses in the band #1. The number of the start groove track in the band #1 is consecutive from the number of the final land track in the band #0. In this manner, the land tracks and the groove tracks are divided into a plurality of groups, and the groups of the land tracks and the groups of the groove tracks are alternately given consecutive numbers to thereby create the LBAs. Alternatively, the numbering of the LBAs for the land tracks may precede the numbering of the LBAs for the groove tracks in the same group.

The LBAs thus numbered according to the above method are converted into the corresponding track addresses and sector addresses by the formatter 44a of the optical disk controller 44. The optical disk drive of the present invention creates the LBAS thus allocated by the above method in the formatter 44a, so that the conversion from the LBAs to the track addresses and sector addresses can be easily performed with reduced errors, and an increase in amount of memory used in the optical disk drive can be avoided.

It is not necessary to relate the numbering method for LBAs with the numbering method for track addresses in the storage medium, but these numbering methods may be independent of each other. That is, the LBAs are converted into track addresses and sector addresses fit for a medium in use by the formatter 44a of the optical disk controller 44. However, by making the numbering method for track addresses shown in FIG. 6 correspond to the numbering method for LBAs shown in FIG. 10 or by making the numbering method for track addresses shown in FIG. 7 correspond to the numbering method for LBAs shown in FIG. 11, the physical addresses and the logical addresses can be easily managed and converted in processing.

How the track addresses and sector addresses are located on the medium is preliminarily held as a program by the controller (MPU or optical disk controller) of the optical disk drive. For example, whether the start track starts from the inner circumference of the medium or from the outer circumference of the medium is dependent on the kind of the medium. Such information is not especially recorded on the medium. Accordingly, the kind of the medium is checked in loading the medium. In the case that the medium is a 640 MB medium, for example, the controller extracts control information of the 640 MB medium from the memory in loading this medium, and grasps the medium configuration and the radial position of a track to be controlled on the medium, thus performing seek control or the like.

Accordingly, the information on configuration of the medium to which the track numbering method embodying the present invention has been applied is required to be preliminarily held by the optical disk drive, so as to operate the optical disk drive. That is, the optical disk drive has the information on the medium configuration, including the total number of tracks, the total number of sectors, a radial position, and a start position. The optical disk drive recognizes the kind of the medium loaded to thereby extract the information on the medium configuration from the memory and also extract control information (information on read power/write power/ erase power, etc.) for the medium. Further, the optical disk drive switches the control information according to the medium configuration, and changes the timing of switching the power between the land tracks and the groove tracks.

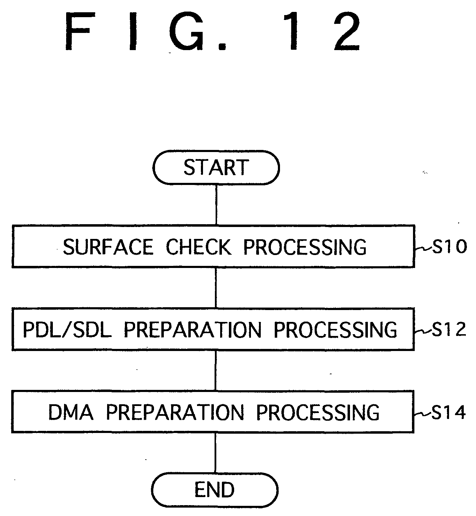

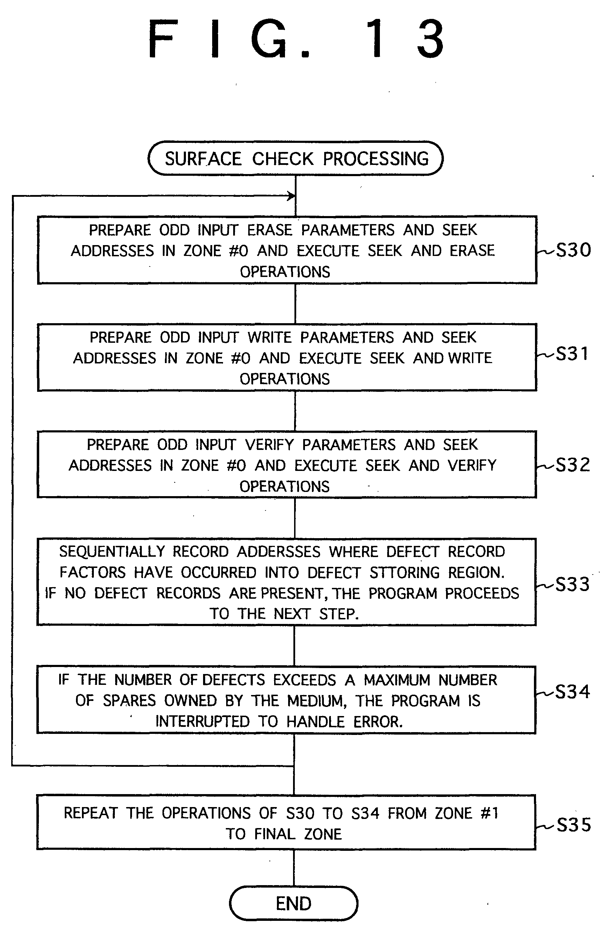

There will now be described physical formatting of the storage medium with reference to FIGS. 12 to 15. This physical formatting is usually carried out at the factory for the storage medium. Referring to FIG. 12, there is generally shown a flowchart of the physical formatting. Step S10 is surface check processing as the main processing of a format unit command. In this processing, a defective sector is detected in certifying the overall surface of the medium. FIG. 13 is a flowchart of the surface check processing shown by step S10 in FIG. 12.

In step S30, optical disk driver (ODD) input erase parameters and seek addresses in the zone #0 are prepared, and seek and erase operations are executed. In step S31, ODD input write parameters and seek addresses in the zone #0 are prepared, and seek and write operations are executed. In step S32, ODD input verify parameters and seek addresses in the zone #0 are prepared, and seek and verify operations are executed. In step S33, addresses where defect record factors have occurred are sequentially recorded into a defect storing region. If no defect records are present, the program proceeds to step S34. In the case that the number of defects exceeds a maximum number of spares owned by the medium, the program is interrupted to handle an error (step S34). In this case, this medium is determined to be unusable. The series of processing from step S30 to step S34 is repeated from the zone #1 to the final zone (step S35).

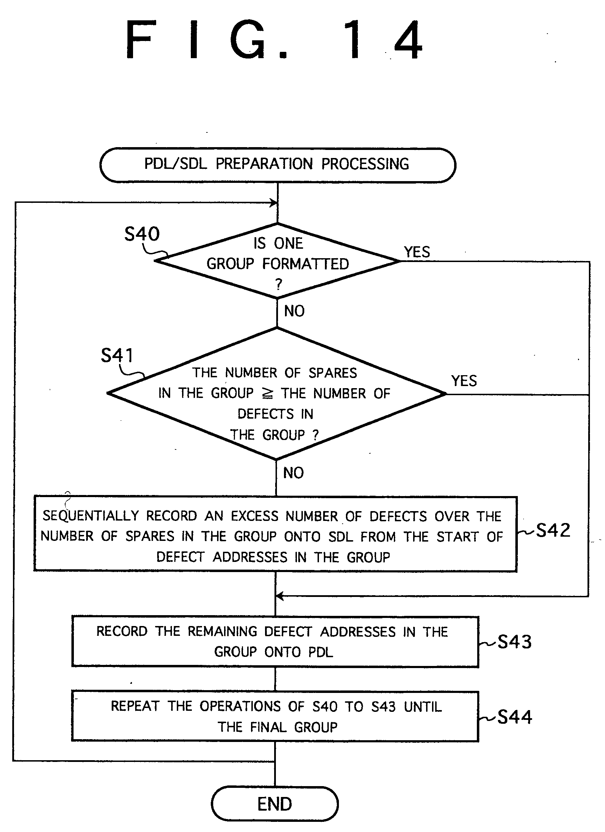

After the surface check processing of step S10 in FIG. 12 is ended, primary defect line (PDL) and secondary defect line (SDL) preparation processing shown by step S12 is then executed. The PDL/SDL preparation processing of step S12 is a routine for dividing the defect addresses obtained in the surface check processing of step S10 between PDL and SDL. FIG. 14 is a flowchart showing the PDL/SDL preparation processing.

In step S40, it is determined whether or not one group is formatted. If the answer in step S40 is affirmative, the defect addresses in the group are recorded on the PDL, whereas if the answer in step S40 is negative, the program proceeds to step S41, in which it is determined whether or not the number of spares in the group is greater than or equal to the number of defects in the group. If the answer in step S41 is affirmative, the defect addresses in the group are recorded on the PDL. If the answer in step S41 is negative, the program proceeds to step S42, in which an excess number of defects over the number of spares in the group are sequentially recorded on the SDL from the start of the defect addresses in the group.

Thereafter, the remaining defect addresses in the group are recorded on the PDL in step S43. The series of processing from step S40 to step S43 is repeated until the final group (step S44). In the case that one group is formatted in step S40, the defect addresses are recorded on the PDL only. The reason for this is that the number of spares in the group is equal to a maximum number of spares owned by the medium. Also in the case of formatting a plurality of groups, the defect addresses are recorded on the PDL only if the number of defects in each group is less than or equal to the number of spares in each group.

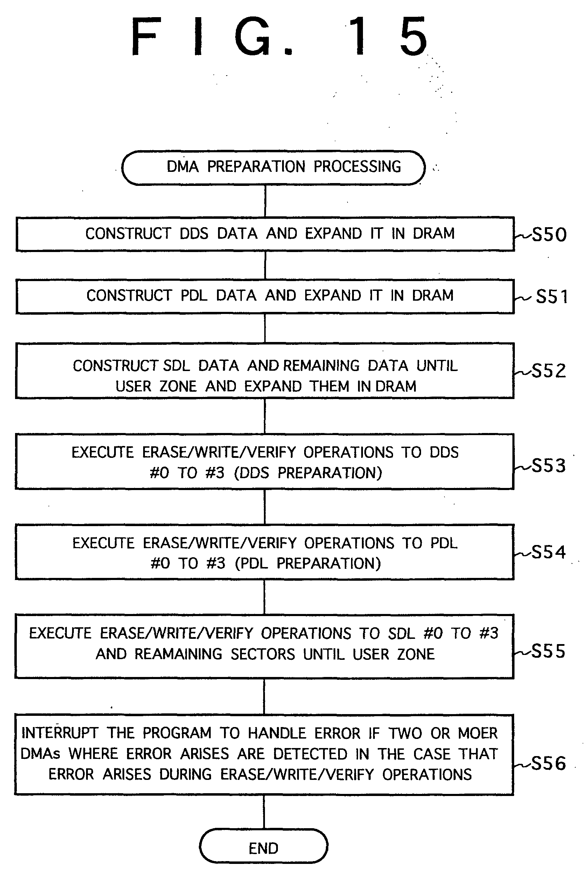

After the PDL/SDL preparation processing of step S12 in FIG. 12 is ended, defect management area (DMA) preparation processing shown by step S14 is then executed. The DMA preparation processing of step S14 is a routine for writing disk definition structure (DDS), PDL, and SDL in a DMA region on the medium. FIG. 15 is a flowchart showing the DMA preparation processing.

In step S50, DDS data is constructed and expanded in the DRAM. In step S51, PDL data is constructed and expanded on the DRAM. In step S52, SDL data and remaining data until the user zone are constructed and expanded in the DRAM. In step S53, erase, write, and verify operations are executed to DDS #0 to #3. In step S54, erase, write, and verify operations are executed to PDL #0 to #3.

In step S55, erase, write, and verify operations are executed to SDL #0 to #3 and remaining sectors until the user zone. In the case that an error arises during the erase, write, and verify operations, the program is interrupted to handle the error if two or more DMAs where the error arises are detected (step S56). After the physical formatting, the medium is formatted on the user side according to the kind of the OS or application software, and defects occurring during the use of the medium by the user are recorded on the SDL.

The number of bytes of LBAs corresponds to the number of bytes of each sector. For example, in the case of the 640 MB medium, the number of bytes of each sector is 2048, and in the case of the 240 MB medium, the number of bytes of each sector is 512. Application software or OS interface changes a specifying method for LBAs according to the kind of the medium. In receiving a command from the application software or OS interface, the formatter as a program in the controller of the optical disk drive makes the LBAs correspond to the addresses on the medium.

While the present invention is applied to a magneto-optical storage device for handling a magneto-optical storage medium in each preferred embodiment mentioned above, the present invention is not limited to the above storage device, but it is applicable also to various storage devices for handling a phase-change type optical storage medium, CD-R, CD-RW, etc.

According to a preferred embodiment of the optical storage medium of the present invention, the consecutive numbers given to the land track addresses are independent of the consecutive numbers given to the groove track addresses. Accordingly, unlike the prior art, it is not necessary to switch servo conditions and recording/reproducing conditions between the tracks, thereby allowing an improvement in access speed.

According to another preferred embodiment of the optical storage medium of the present invention, the land tracks and the groove tracks are divided into a plurality of groups, and the groups of the land tracks and the groups of the groove tracks are alternately given track numbers. Accordingly, although the number of shifts between the land tracks and the groove tracks is larger, head movement in the radial direction of the disk can be made less, thereby allowing an improvement in access speed.

According to the allocating method for LBAs embodying the present invention, the processing of converting the LBAs into track numbers and sector numbers can be easily performed, thereby avoiding an increase in alternation processing time and an increase in amount of memory used in the disk drive.

The present invention is not limited to the details of the above described preferred embodiments.

## Claims

1. An optical storage medium having land tracks and groove tracks alternately formed and capable of recording and/or reproducing information with respect to said land tracks and said groove tracks, comprising:

   a plurality of first ID portions respectively having first track addresses as consecutive numbers given to said land tracks; and
   a plurality of second ID portions respectively having second track addresses as consecutive numbers given to said groove tracks independently of said consecutive numbers of said first track addresses.

2. An optical storage medium according to claim 1, wherein each of said first ID portions has a first identifier for identifying said land tracks, and each of said second ID portions has a second identifier for identifying said groove tracks, and
   wherein each of said first ID portions is provided in each of first headers and each of said second ID portions is provided in each of second headers.

3. An optical storage medium having land tracks and groove tracks alternately formed and divided into a plurality of groups, and capable of recording and/or reproducing information with respect to said land tracks and said groove tracks, comprising:

   a plurality of first ID portions respectively having first track addresses as consecutive numbers given to said land tracks in each group; and
   a plurality of second ID portions respectively having second track addresses as consecutive numbers given to said groove tracks in each group;
   said consecutive numbers of said second track addresses being consecutive to said consecutive numbers of said first track addresses in the same group;
   said consecutive numbers of said first track addresses in any one of said groups being consecutive to said consecutive numbers of said second track addresses in its immediately preceding group.

4. An optical storage medium according to claim 3, wherein each of said first ID portions has a first identifier for identifying said land tracks, and each of said second ID portions has a second identifier for identifying said groove tracks, and
   wherein each of said first ID portions is provided in each of first headers and each of said second ID portions is provided in each of second headers.

5. An optical storage medium having land tracks and groove tracks alternately formed and divided into a plurality of groups, and capable of recording and/or reproducing information with respect to said land tracks and said groove tracks, comprising:

   a plurality of first ID portions respectively having first track addresses as consecutive numbers given to said land tracks in each group; and
   a plurality of second ID portions respectively having second track addresses as consecutive numbers given to said groove tracks in each group;
   said consecutive numbers of said first track addresses being consecutive to said consecutive numbers of said second track addresses in the same group;
   said consecutive numbers of said second track addresses in any one of said groups being consecutive to said consecutive numbers of said first track addresses in its immediately preceding group.

6. An optical storage medium according to claim 5, wherein each of said first ID portions has a first identifier for identifying said land tracks, and each of said second ID portions has a second identifier for identifying said groove tracks; and

wherein each of said first ID portions is provided in each of first headers and each of said second ID portions is provided in each of second headers.

7. An optical storage device for transferring information by logical block addresses to an optical storage medium having land tracks and groove tracks alternately formed and given a plurality of track addresses and a plurality of sector addresses, comprising:

a producing unit for producing said logical block addresses for giving consecutive numbers to said track addresses of one kind of said land tracks and said groove tracks in each sector, and giving consecutive numbers to said track addresses of the other kind of said land tracks and said groove tracks in each sector so that said consecutive numbers of said track addresses of the other kind are consecutive to said consecutive numbers of said track addresses of said one kind; and
a converting unit for converting said logical block addresses into said track addresses and said sector addresses of said optical storage medium.

8. An optical storage device for transferring information by logical block addresses to an optical storage medium having land tracks and groove tracks alternately formed and given a plurality of track addresses and a plurality of sector addresses, comprising:

a producing unit for producing said logical block addresses for dividing said land tracks and said groove tracks into a plurality of groups, giving consecutive numbers to said track addresses of one kind of said land tracks and said groove tracks in any one of said groups in each sector, giving consecutive numbers to said track addresses of the other kind of said land tracks and said groove tracks in said any group in each sector so that said consecutive numbers of said track addresses of the other kind are consecutive to said consecutive numbers of said track addresses of said one kind, and giving consecutive numbers to said track addresses of said one kind in the group next to said any group in each sector so that said consecutive numbers of said track addresses of said one kind in said next group are consecutive to said consecutive numbers of said track addresses of the other kind in said any group; and
a converting unit for converting said logical block addresses into said track addresses and said sector addresses of said optical storage medium.

9. A producing method for logical block addresses for transferring information to an optical storage medium having land tracks and groove tracks alternately formed and given a plurality of track addresses and a plurality of sector addresses, comprising the steps of:

giving consecutive numbers to said track addresses of one kind of said land tracks and said groove tracks in each sector; and
giving consecutive numbers to said track addresses of the other kind of said land tracks and said groove tracks in each sector so that said consecutive numbers of said track addresses of the other kind are consecutive to said consecutive numbers of said track addresses of said one kind.

10. A producing method for logical block addresses for transferring information to an optical storage medium having land tracks and groove tracks alternately formed and given a plurality of track addresses and a plurality of sector addresses, comprising the steps of:

dividing said land tracks and said groove tracks into a plurality of groups;
giving consecutive numbers to said track addresses of one kind of said land tracks and said groove tracks in any one of said groups in each sector;
giving consecutive numbers to said track addresses of the other kind of said land tracks and said groove tracks in said any group in each sector so that said consecutive numbers of said track addresses of the other kind are consecutive to said consecutive numbers of said track addresses of said one kind; and
giving consecutive numbers to said track addresses of said one kind in the group next to said any group in each sector so that said consecutive numbers of said track addresses of said one kind in said next group are consecutive to said consecutive numbers of said track addresses of the other kind in said any group.

# F I G. 1

# F I G. 2

TRACK NUMBER

T+2

T+1

T+1

24

18

SECTOR NUMBER 3

SECTOR NUMBER 2

SECTOR NUMBER 1

SECTOR NUMBER N

SECTOR NUMBER N-1

T

T

20

24

EP 1 168 345 A2

# F I G. 3

| 0 | 1 | 2 | | | N-1 | N | |
|---|---|---|---|---|---|---|---|
| 1 SECTOR | 1 SECTOR | 1 SECTOR | | | 1 SECTOR | 1 SECTOR | |

26  28

# F I G. 4

RECORDING REGION

GROOVE HEADER REGION

LAND HEADER REGION

RECORDING REGION

28

30

32

28

26

EP 1 168 345 A2

# F I G. 5

| TRACK No. | ID No. | SECTOR No. | CRC |
|-----------|--------|------------|-----|

24

| SM | VF01 | AM | ID1 | VF02 | AM | ID2 | PA | GAP | VF03 | SYNC | DATA REGION | PA | BUFFER |
|----|------|----|----|------|----|----|----|----|------|------|-------------|----|--------|

26 : HEADER        28 : RECORDING REGION

# F I G . 6

| GROOVE | TRACK NUMBER | LAND | TRACK NUMBER |
|--------|--------------|------|--------------|
| BAND 0 | 0<br>$N1-1$ | BAND 0 | 0<br>$N1-1$ |
| BAND 1 | $N1$<br>$N2-1$ | BAND 1 | $N1$<br>$N2-1$ |
| BAND 2 | $N2$<br>$N3-1$ | BAND 2 | $N2$<br>$N3-1$ |
| BAND 3 | $N3$<br>$N4-1$ | BAND 3 | $N3$<br>$N4-1$ |
| ⋮ | ⋮ | ⋮ | ⋮ |
| BAND n | $Nn-1$<br>$Nn$ | BAND n | $Nn-1$<br>$Nn$ |

# F I G. 7

| GROOVE | TRACK NUMBER | LAND | TRACK NUMBER |
|--------|--------------|------|--------------|
| BAND 0 | 0<br>N1−1 | BAND 0 | N1<br>N2−1 |
| BAND 1 | N2<br>N3−1 | BAND 1 | N3<br>N4−1 |
| BAND 2 | N4<br>N5−1 | BAND 2 | N5<br>N6−1 |
| BAND 3 | N6<br>N7−1 | BAND 3 | N7<br>N8−1 |
| ⋮ | ⋮ | ⋮ | ⋮ |
| BAND n | Nn-2<br>Nn-1−1 | BAND n | Nn-1<br>Nn |

# F I G . 8

**40 : CONTROL UNIT**  **41 : ENCLOSURE**

# F I G. 9

104 : INLET DOOR

106 : MO CARTRIDGE

12 : MO MEDIUM

102 : ELECTROMAGNET

100 : HOUSING

112

110

SPINDLE MOTOR

FIXED OPTICAL SYSTEM

70

114

108 : CARRIAGE

EP 1 168 345 A2

# F I G. 1 0

| GROOVE | L B A | LAND | L B A |
|--------|-------|------|-------|
| BAND 0 | 0<br>$N1-1$ | BAND 0 | Nn<br>$Nn+1-1$ |
| BAND 1 | N1<br>$N2-1$ | BAND 1 | N1<br>$Nn+2-1$ |
| BAND 2 | N2<br>$N3-1$ | BAND 2 | N2<br>$Nn+3-1$ |
| BAND 3 | N3<br>$N4-1$ | BAND 3 | N3<br>$Nn+4-1$ |
| ⋮ | ⋮ | ⋮ | ⋮ |
| BAND n | Nn-1<br>$Nn-1$ | BAND n | N2n-1<br>$N2n-1$ |

# F I G. 1 1

| GROOVE | L B A | LAND | L B A |
|--------|-------|------|-------|
| BAND 0 | 0<br>N1−1 | BAND 0 | N1<br>N2−1 |
| BAND 1 | N2<br>N3−1 | BAND 1 | N3<br>N4−1 |
| BAND 2 | N4<br>N5−1 | BAND 2 | N5<br>N6−1 |
| BAND 3 | N6<br>N7−1 | BAND 3 | N7<br>N8−1 |
| ⋮ | ⋮ | ⋮ | ⋮ |
| BAND n | $N_{n-2}$−1<br>Nn−1 | BAND n | $N_{n-1}$−1<br>Nn |

# F I G .   1 2

```
          ┌──────────┐
          │  START   │
          └────┬─────┘
               │
┌──────────────┴──────────────┐
│  SURFACE  CHECK  PROCESSING  │─~S10
└──────────────┬──────────────┘
               │
┌──────────────┴──────────────┐
│ PDL/SDL  PREPARATION  PROCESSING │─~S12
└──────────────┬──────────────┘
               │
┌──────────────┴──────────────┐
│  DMA  PREPARATION  PROCESSING  │─~S14
└──────────────┬──────────────┘
               │
          ┌────┴─────┐
          │   END    │
          └──────────┘
```

# F I G .  1 3

```
( SURFACE CHECK PROCESSING )
                │
                ▼
┌──────────────────────────────────────────┐
│ PREPARE ODD INPUT ERASE PARAMETERS AND SEEK │
│ ADDRESSES IN ZONE #0 AND EXECUTE SEEK AND ERASE │ ～S30
│              OPERATIONS                     │
└──────────────────────────────────────────┘
                │
                ▼
┌──────────────────────────────────────────┐
│ PREPARE ODD INPUT WRITE PARAMETERS AND SEEK │
│ ADDRESSES IN ZONE #0 AND EXECUTE SEEK AND WRITE │ ～S31
│              OPERATIONS                     │
└──────────────────────────────────────────┘
                │
                ▼
┌──────────────────────────────────────────┐
│ PREPARE ODD INPUT VERIFY PARAMETERS AND SEEK │
│ ADDRESSES IN ZONE #0 AND EXECUTE SEEK AND VERIFY │ ～S32
│              OPERATIONS                     │
└──────────────────────────────────────────┘
                │
                ▼
┌──────────────────────────────────────────┐
│ SEQUENTIALLY RECORD ADDERSSES WHERE DEFECT RECORD │
│ FACTORS HAVE OCCURRED INTO DEFECT STTORING REGION. │
│ IF NO DEFECT RECORDS ARE PRESENT, THE PROGRAM PROCEEDS │ ～S33
│           TO THE NEXT STEP.                 │
└──────────────────────────────────────────┘
                │
                ▼
┌──────────────────────────────────────────┐
│ IF THE NUMBER OF DEFECTS EXCEEDS A MAXIMUM NUMBER │
│ OF SPARES OWNED BY THE MEDIUM, THE PROGRAM IS │ ～S34
│        INTERRUPTED TO HANDLE ERROR.         │
└──────────────────────────────────────────┘
                │
                ▼
┌──────────────────────────────────────────┐
│ REPEAT THE OPERATIONS OF S30 TO S34 FROM ZONE #1 │ ～S35
│              TO FINAL ZONE                  │
└──────────────────────────────────────────┘
                │
                ▼
           ( END )
```

# F I G . 1 4

PDL/SDL PREPARATION PROCESSING

S40 — IS ONE GROUP FORMATTED ? — YES

NO

S41 — THE NUMBER OF SPARES IN THE GROUP $\geqq$ THE NUMBER OF DEFECTS IN THE GROUP ? — YES

NO

SEQUENTIALLY RECORD AN EXCESS NUMBER OF DEFECTS OVER THE NUMBER OF SPARES IN THE GROUP ONTO SDL FROM THE START OF DEFECT ADDRESSES IN THE GROUP — S42

RECORD THE REMAINING DEFECT ADDRESSES IN THE GROUP ONTO PDL — S43

REPEAT THE OPERATIONS OF S40 TO S43 UNTIL THE FINAL GROUP — S44

END

# F I G .  1 5

```
           ┌─────────────────────────────────┐
           │   DMA PREPARATION PROCESSING    │
           └─────────────────────────────────┘
                            │
  ┌──────────────────────────────────────────────┐
  │   CONSTRUCT DDS DATA AND EXPAND IT IN DRAM    │───S50
  └──────────────────────────────────────────────┘
                            │
  ┌──────────────────────────────────────────────┐
  │   CONSTRUCT PDL DATA AND EXPAND IT IN DRAM    │───S51
  └──────────────────────────────────────────────┘
                            │
  ┌──────────────────────────────────────────────┐
  │  CONSTRUCT SDL DATA AND REMAINING DATA UNTIL  │───S52
  │      USER ZONE AND EXPAND THEM IN DRAM        │
  └──────────────────────────────────────────────┘
                            │
  ┌──────────────────────────────────────────────┐
  │   EXECUTE ERASE/WRITE/VERIFY OPERATIONS TO DDS│───S53
  │          #0 TO #3 (DDS PREPARATION)           │
  └──────────────────────────────────────────────┘
                            │
  ┌──────────────────────────────────────────────┐
  │   EXECUTE ERASE/WRITE/VERIFY OPERATIONS TO PDL│───S54
  │          #0 TO #3 (PDL PREPARATION)           │
  └──────────────────────────────────────────────┘
                            │
  ┌──────────────────────────────────────────────┐
  │ EXECUTE ERASE/WRITE/VERIFY OPERATIONS TO SDL  │───S55
  │ #0 TO #3 AND REAMAINING SECTORS UNTIL USER ZONE│
  └──────────────────────────────────────────────┘
                            │
  ┌──────────────────────────────────────────────┐
  │ INTERRUPT THE PROGRAM TO HANDLE ERROR IF TWO  │
  │ OR MOER DMAs WHERE ERROR ARISES ARE DETECTED  │───S56
  │ IN THE CASE THAT ERROR ARISES DURING          │
  │ ERASE/WRITE/VERIFY OPERATIONS                 │
  └──────────────────────────────────────────────┘
                            │
                      ┌───────────┐
                      │    END    │
                      └───────────┘
```